# EUROPEAN PATENT APPLICATION

(11) **EP 2 961 210 A1**
(43) Date of publication of application: **30.12.2015**
(21) Application number: 15170399.8
(22) Date of filing: 03.06.2015
(51) Int. Cl.: H04W 12/06

(54) **AUTHENTICATION SYSTEM, AUTHENTICATION METHOD, AUTHENTICATION APPARATUS, AND RECORDING MEDIUM**

(30) Priority: 26.06.2014 JP 2014131745
(71) Applicant: Ricoh Company, Ltd., Tokyo 143-8555 (JP)
(72) Inventor: TAKAYASU, Osamu, Tokyo, 143-8555 (JP)
(74) Representative: Schwabe - Sandmair - Marx

(57) **Abstract**

An authentication system includes a communications terminal, an authentication apparatus providing a function to the communications terminal using an access token, a first request part requesting the authentication apparatus to transmit client information for issuing the access token, a first transmitter generating the client information to be transmitted to the communications terminal in response to the request from the first request part, a second request part transmitting the client information to the authentication apparatus and requesting the authentication apparatus to provide the access token, a determination part determining whether the received client information is the client information transmitted from the first transmitter in response to the request from the second request part, a generator generating the access token when determining that the received client information is the client information transmitted from the first transmitter, and a second transmitter transmitting the generated access token to the communications terminal.

## Description

### BACKGROUND OF THE INVENTION

### 1. Field of the Invention

The disclosures discussed herein relate to an authentication system, an authentication method, an authentication apparatus, and a non-transitory computer-readable recording medium storing an authentication program.

### 2. Description of the Related Art

In the related art authentication technology (e.g., OAuth protocol), client applications installed in terminals and the like acquire access tokens from an authentication server so that the client applications are allowed to have access to protected resources. The access tokens are issued by the authentication server with the approval of the resource owner. Web services or clients use the access tokens to have access to the protected resources owned by the resource server (see Non-Patent Document 1).

Further, Japanese Laid-open Patent Publication No. 2007-515127 (hereinafter referred to as "Patent Document 1") discloses a server configuration to improve security. This configuration issues client IDs to the clients who desire to access the APIs so as to only allow the authorized clients to have access to the API.

For example, in the existing OAuth 2.0, client information (such as client_id or client_secret) for identifying the client applications that utilize OAuth 2.0 is uniquely determined in accordance with types of the clients. However, when the client is installed in a general-purpose computing device such as smartphone or a PC, the client information (specifically, client_secret) held inside the client may be leaked. When the client information is leaked, all the users who use the same type of the client may need to update the client_secret. The related art technology may also need to conduct an update process or the like similar to the above when the client ID is leaked.

### RELATED ART DOCUMENTS

### PATENT DOCUMENT

Patent Document 1: Japanese Laid-open Patent Publication No. 2007-515127 NON-PATENT DOCUMENT
Non-Patent Document 1: D. Hardt, Ed, "RFC-6749", [online], October, the Internet <URL:http://tools.ietf.org/html/rfc6749>

### SUMMARY OF THE INVENTION

Accordingly, it is a general object in one embodiment of the present invention to provide a technology to reduce an effect due to the leakage of the client information that is used for generating the access tokens.

According to an aspect of embodiments, there is disclosed an authentication system that includes a communications terminal; an authentication apparatus configured to provide a function to the communications terminal using an access token; a first request part configured to request the authentication apparatus to transmit client information for issuing the access token; a first transmitter configured to generate the client information and transmit the generated client information to the communications terminal in response to the request from the first request part; a second request part configured to transmit the client information to the authentication apparatus and request the authentication apparatus to provide the access token; a determination part configured to determine whether the received client information is the client information transmitted from the first transmitter in response to the request from the second request part; a generator configured to generate the access token when the determination part determines that the received client information is the client information transmitted from the first transmitter; and a second transmitter configured to transmit the generated access token to the communications terminal.

Other objects, features and advantages of the present invention will become more apparent from the following detailed description when read in conjunction with the accompanying drawings.

### BRIEF DESCRIPTION OF THE DRAWINGS

FIG. 1 is a schematic diagram illustrating an authentication system according to an embodiment;
FIG. 2 is a hardware configuration diagram of an authentication apparatus in the embodiment;
FIG. 3 is a hardware configuration diagram of a communications terminal in the embodiment;
FIG. 4 is a functional block diagram of the authentication apparatus in the embodiment;
FIG. 5 is a diagram illustrating an example of a table storing management information;
FIG. 6 is a diagram illustrating an example of a table storing authentication information;
FIG. 7 is a diagram illustrating an example of a table storing access information;
FIG. 8 is a diagram illustrating an example of a client information change screen;
FIG. 9 is a sequence diagram illustrating a process of issuing client information and an access token;
FIG. 10 is a sequence diagram illustrating a client information changing process; and
FIGS. 11a and 11B are diagrams illustrating an effect in the embodiment.

### DETAILED DESCRIPTION OF THE PREFERRED EMBODIMENTS

In the following, a description is given of embodiments with reference to accompanying drawings.

### OUTLINE OF AUTHENTICATION SYSTEM

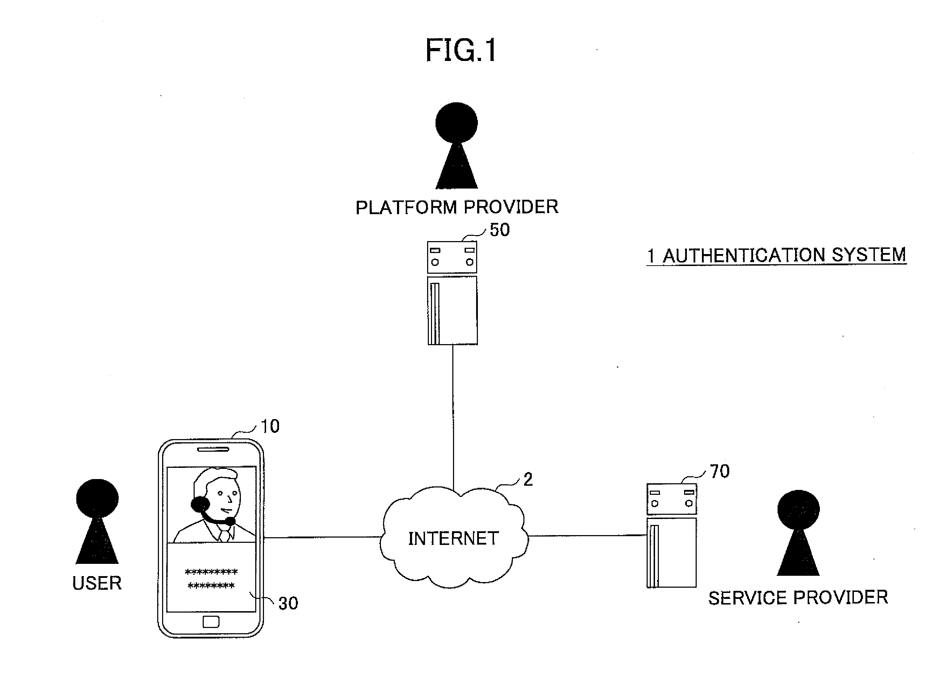

FIG. 1 is a schematic diagram of an authentication system according to an embodiment. FIG. 1 illustrates a communications terminal 10 used by a user, an authentication apparatus 50 provided by a platform provider, and a client providing apparatus 70 provided by a service provider. The above-described apparatuses are connected to one another via a network such as the Internet 2.

The authentication apparatus 50 is a server computer (or system) configured to externally disclose APIs (Application Programming Interfaces) to provide other apparatuses with functions. The authentication apparatus 50 may, for example, operate as an OAuth server in the OAuth protocol.

The communications terminal 10 is a device used by a user such as smartphone, a tablet, a PC, and the like. In the communications terminal 10, a client application 30 (hereinafter simply called a client 30) is installed. The client 30 may, for example, be provided from the client providing apparatus 70 via the Internet 2. The client 30 may operate as an OAuth client in the OAuth protocol, and be able to use functions of the authentication apparatus 50 via APIs provided by the authentication apparatus 50.

The client 30 installed in the communications apparatus 10 may be able to use the APIs provided by the authentication apparatus 50 by using access tokens issued by the authentication apparatus 50 in accordance with the OAuth protocol. The authentication apparatus 50 generates an access token by using client information (client_secret, client_id) assigned to the client 30.

Note that the authentication apparatus 50 according to an embodiment generates different client information for each of clients 30 as a unit installed in the corresponding communications terminals 10 used by different users. The client 30 is installed in the communications terminal 10, and subsequently accesses the authentication apparatus 50 to acquire the client information before the client 30 acquires an access token. The client 30 then requests the authentication apparatus 50 to provide an access token using the acquired client information. When the client information is correct, the authentication apparatus 50 issues an access token to the client 30.

By performing the above-described operations, even when the client information of the client 30 installed in one of the communications terminals 10 is leaked to a third party, it is not necessary to update the client information of all the clients 30 installed in the other communications terminals 10. The service provider providing the clients 30 may only change the leaked client information. Accordingly, the service provider merely requests the user of the client 30 associated with the leaked client information to change the client information. In the following, a detailed illustration is given of the embodiment.

Note that in FIG. 1, the authentication apparatus 50 is composed of a computer having one casing; however, the authentication apparatus 50 is not limited to this configuration. The authentication apparatus 50 may be formed as a system composed of two or more computers. However, in the following, a description is given by employing an example of the authentication apparatus 50 composed of a computer having one casing.

Further, the authentication apparatus 50 may be an authentication server configured to operate an authentication protocol other than the OAuth protocol.

### HARDWARE CONFIGURATION OF AUTHENTICATION APPARATUS

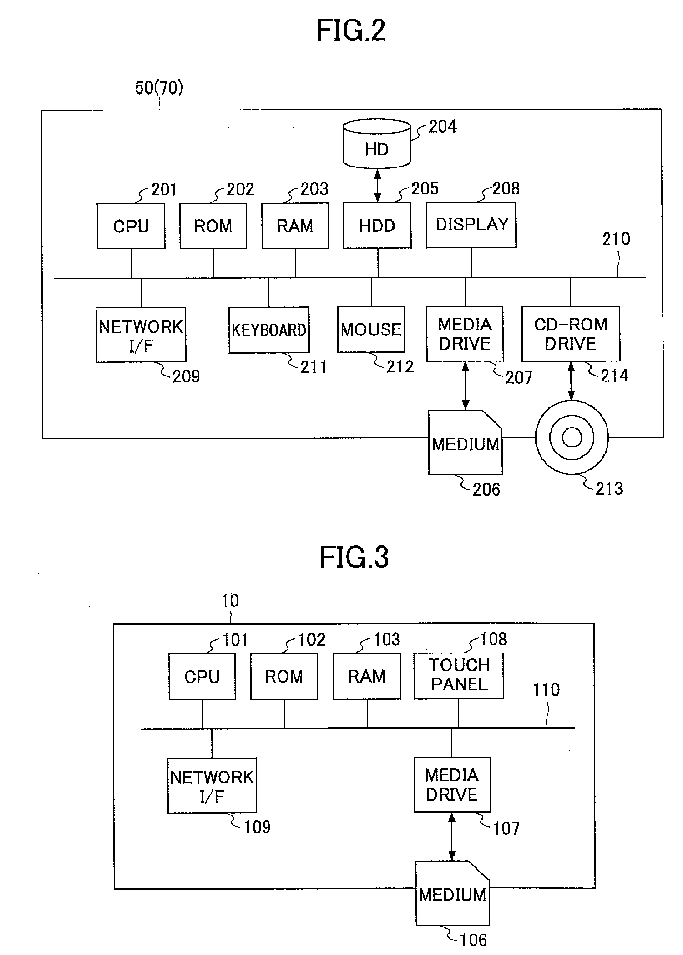

FIG. 2 is a hardware configuration diagram of the authentication apparatus 50 according to the embodiment. The authentication apparatus 50 includes a CPU 201 configured to control overall operations of the authentication apparatus 50, a ROM 202 configured to store a program such as IPL (Initial Program Loader), a RAM 203 configured to serve as a work area of the CPU 201, a HD 204 configured to store data tailored for programs of the authentication apparatus 50, an HDD (hard disk drive) 205 configured to control reading or writing of the data with respect to the HD 204 in accordance of the control of the CPU 201, a media drive 207 configured to control reading or writing (storing) of data with respect to a recording medium 206 such as flash memory or the like, a display 208 configured to display various types of information such as a cursor, menus, windows, characters, or images, a network I/F 209 configured to perform data communications using the Internet 2, a keyboard 211 provided with multiple keys for inputting characters, numeric values, various types of instructions, and the like, a mouse 212 configured to select or execute various types of instructions, select a process target, and move a cursor, a CD-ROM drive 214 configured to control reading or writing of data with respect to a CD-ROM (compact disc read only memory) as an example of a removable recording medium, and a bus line 210 such as an address bus or a data bus for electrically connecting the above-described components illustrated in FIG. 2.

### HARDWARE CONFIGURATION OF COMMUNICATIONS TERMINAL

FIG. 3 is a hardware configuration diagram of the communications terminal 10 according to the embodiment. The communications terminal 10 includes a CPU 101 configured to control overall operations of the communications terminal 10, a ROM 102 configured to store a program such as IPL, a RAM 103 configured to serve as a work area of the CPU 101, a media drive 107 configured to control reading or writing (storing) of data with respect to an internal or external recording medium 106 such as flash memory or the like, a touch panel 108 configured to display various types of information such as a cursor, menus, windows, characters, or images, and detect contact of a user's finger to receive an input, a network I/F 109 configured to perform data communications via a mobile phone communications network or LAN (local area network), and a bus line 110 such as an address bus or a data bus for electrically connecting the above-described components illustrated in FIG. 3.

Note that FIG. 3 illustrates a hardware configuration when the communications terminal 10 is a device such as smartphone or a tablet. However, the communications terminal 10 may have a hardware configuration other than that illustrated in FIG. 3. For example, when the communications terminal 10 is a PC, the communications terminal 10 may have the keyboard 211, the mouse 212 (or a touch pad), or the like illustrated in FIG. 2.

### FUNCTIONS

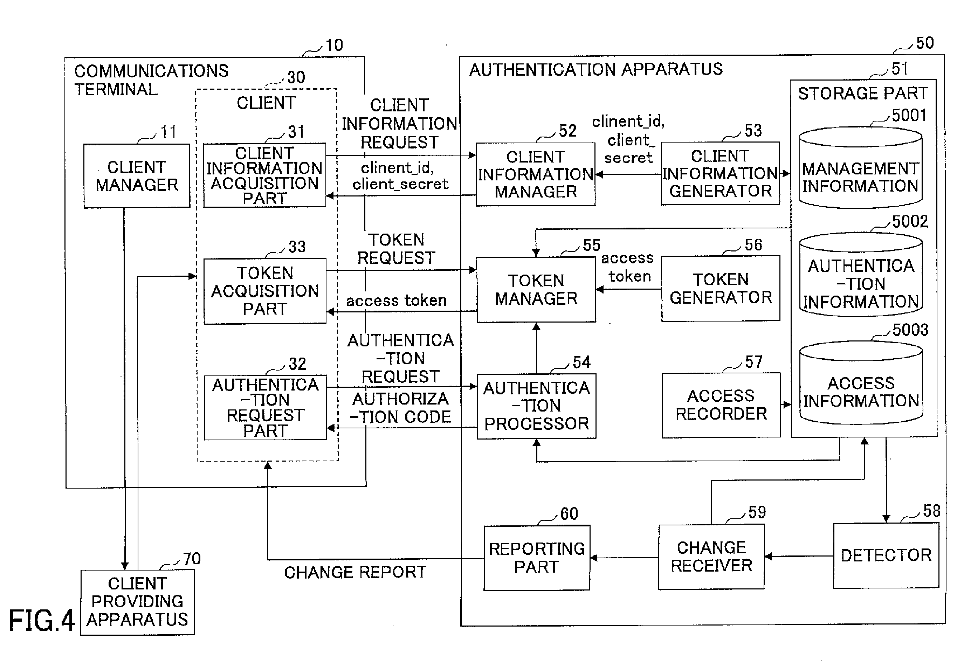

FIG. 4 is a functional block diagram of the authentication apparatus 50 and the communications terminal 10 in the embodiment. Initially, the communications terminal 10 in the embodiment includes a client manager 11, a client information acquisition part 31, an authentication request part 32, and a token acquisition part 33.

The client manager 11 may be implemented by a process of the CPU 101, and the like illustrated in FIG. 3, and is configured to download a program of the client 30 from the client providing apparatus 70 of the service provider in accordance with instructions from a user. Subsequently, the client manager 11 installs the downloaded program in the ROM 10 of the communications terminal 10 or the medium 106.

The client manager 11 reads this program in the RAM 103, and causes the CPU 101 to execute the program to implement the functions of the client 30. In the following, a detailed description is given of the respective functions of the client information acquisition part 31, the authentication request part 32, and the token acquisition part 33 included in the client 30.

The client information acquisition part 31 may be implemented by a process of the CPU 101, the network I/F 109, and the like, and is configured to request the authentication apparatus 50 to transmit the client information (client_secret, client_id). The client information acquisition part 31 may be able to request the authentication apparatus 50 to transmit the client information upon initial activation of the client 30 or upon receiving a change report of the client information from the authentication apparatus 50. At this time, the client information acquisition part 31 may report a client number or a client name (e.g., Apps for Phone) uniquely assigned to the client 30 to the authentication apparatus 50. The client information acquisition part 31 may receive the client information from the authentication apparatus 50, and store the received client information in a not-illustrated storage part.

The authentication request part 32 may be implemented by a process of the CPU 101, the network I/F 109, and the like, and is configured to request the authentication apparatus to perform user authentication utilizing an ID and a password for allowing the client 30 to access the functions provided by the authentication apparatus 50. The authentication request part 32 receives an authorization code from the authentication apparatus 50 in response to successful user authentication.

The token acquisition part 33 may be implemented by the CPU 101, the network I/F 109, and the like. The token acquisition part 33 is configured to request the authentication apparatus 50 to transmit an access token by using the authorization code that the authentication request part 32 has received from the authentication apparatus 50, and the client information received by the client information acquisition part 31. Then, the token acquisition part 33 receives the access token from the authentication apparatus 50, and stores the received access token in a not-illustrated storage part. Thereafter, the client 30 may be able to use on APIs provided by the authentication apparatus 50 by utilizing the stored access token.

Further, the authentication apparatus 50 in the embodiment includes a storage part 51, a client information manager 52, a client information generator 53, an authentication processor 54, a token manager 55, a token generator 56, an access recorder 57, a detector 58, a change receiver 59, and a reporting part 60.

The storage part 51 may be implemented by the HD 204 and HDD 205 illustrated in FIG. 2, and is configured to store management information 5001, authentication information 5002, and access information 5003.

The management information 5001 manages client information issued for each of the clients 30, or information of the clients 30 themselves.

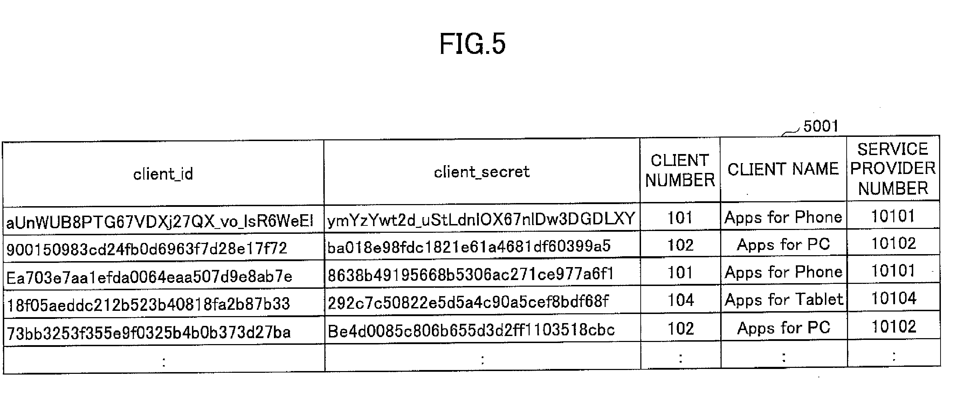

FIG. 5 is a diagram illustrating an example of a table storing the management information 5001. The management information 5001 stores the client information (client_id and client_secret) used in the OAuth, the client number indicating a type of the client 30, the client name of the client 30, and a service provider's number assigned in advance to the service provider providing the client 30 in association with one another. Note that the client information is individually generated after the client 30 is installed in each of the communications terminals 10. On the other hand, the client number, the client name, and the service provider's number are provided with respective predetermined numbers, for each of the clients 30.

The authentication information 5002 manages authentication information of users of the communications terminals 10 that have the clients 30 installed.

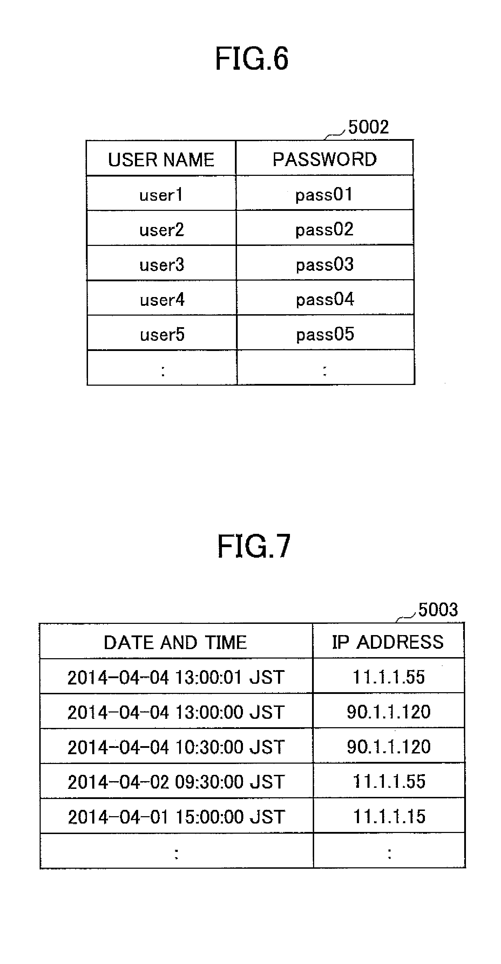

FIG. 6 is a diagram illustrating an example of a table storing the management information 5002. The management information 5002 of FIG. 6 stores a user name (user ID) uniquely assigned to each of the users, and a corresponding password to each of the users. A combination of the user name and the corresponding password is set in advance by the user.

The access information 5003 saves records of accesses made by the client 30.

FIG. 7 is a diagram illustrating an example of a table storing the access information 5003. The access information 5003 stores date and time at which an access is made, in association with an IP address used by the client 30 for performing communications to access the authentication apparatus 50. Note that the table illustrated in FIG. 7 may be provided for each of the clients 30 (i.e., for each client_id) installed in the communications terminals 10, or each of the users.

The client information manager 52 may mainly be implemented by the CPU 201 illustrated in FIG. 2, and is configured to instruct the client information generator 53 to generate the client information upon receiving from the client 30 the client information transmission request. Then, the client information manager 52 transmits the generated client information to the client 30.

The client information generator 53 may mainly be implemented by the CPU 201 illustrated in FIG. 2, and is configured to generate the client information (i.e., client_secret, client_id) in response to the instruction from the client information manager 52. Note that the client information generator 53 may, for example, use a hush function to generate client information composed of an unpredictable combination of a numeric value and a string.

Further, the client information manager 53 stores the generated client information in the management information 5001. At this time, the client information manager 53 may store the generated client information together with the client number or the client name reported from the client 30 in the management information 5001. Further, the client information manager 53 may also store in the management information 500 the provider's number of the service provider of the client 30 specified by the client name. The client information generator 53 reports the generated client information to the client information manager 52.

The authentication processor 54 may mainly be implemented by the CPU 201 illustrated in FIG. 2, and is configured to verify, upon receiving of the user authentication request from the client 30, whether the ID and password combination received together with the request is registered in the authentication information 5002. Then, when the ID and password combination is registered in the authentication information 5002, the authentication processor 54 determines that the authentication is successful, and transmits an authorization code to the client 30. The authorization code is required later when the client 30 requests an access token.

The token manager 55 may mainly be implemented by the CPU 201 illustrated in FIG. 2, and is configured to receive the access token transmission request from the client 30. At this time, the token manager 55 receives the authorization code and the client information together with the access token transmission request. When the received authorization code is identical to the authorization code transmitted by the authentication processor 54, and the received client information is registered in the management information 5001, the token manager 55 instructs the token generator 56 to generate an access token. Then, the token manager 55 transmits the generated access token to the client 30.

The token generator 56 may mainly be implemented by the CPU 201 illustrated in FIG. 2, and is configured to generate the access token in response to the instruction from the token manager 55. The token generator 56 may be able to generate an access token having a configuration similar to an access token used in the OAuth, for example. The token generator 56 reports the generated access token to the token manager 55.

The access recorder 57 may mainly be implemented by the CPU 201 illustrated in FIG. 2, and is configured to store, when the authentication apparatus 50 is accessed by the client 30 (a communications terminal 10), the assessed date and time, and an IP address used by the client 30 in the access information 5003.

The detector 58 may mainly be implemented by the CPU 201 illustrated in FIG. 2, and is configured to monitor the access information 5003 periodically or non-periodically, and detect unauthorized access by spoofing a user based on the accessed date and time, and the IP address. For example, the detector 58 may be able to detect the fact of the unauthorized access when the access information recorded for each of the clients 30 includes a record satisfying the following conditions.
- A record includes access from the IP address assigned to different countries at the same time or at approximately the same time.
- A record includes an unexpected frequency of accesses (e.g., access is recorded per second during the course of a day).
When the detector 58 detects unauthorized access associated with a certain client 30, the detector 58 reports such an indication of the unauthorized access together with the client_id assigned to the client 30 to the service provider that provides the client 30.

For example, the detector 58 may be able to report the indication of the unauthorized access and the like by using an email address of the service provider registered in advance. In addition, the detector 58 may report the indication of the unauthorized access and the like to a site that may be accessed by the service provider.

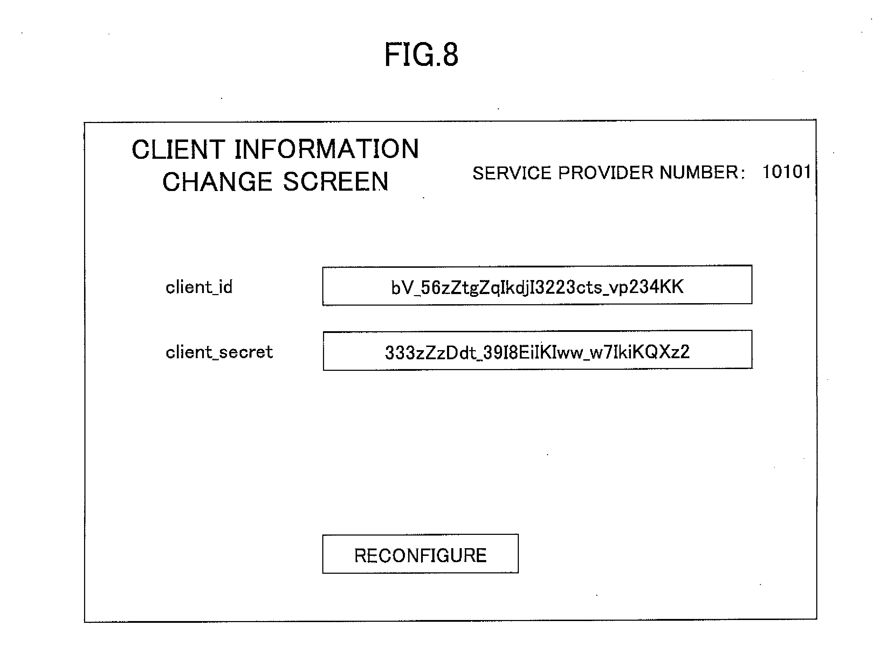

The change receiver 59 may mainly be implemented by the CPU 201 illustrated in FIG. 2, and is configured to present a client information change screen illustrated in FIG. 8 to the service provider, and receive a client information change screen of the client 30 from which the unauthorized access is detected. The change receiver 59 may, for example, display the screen illustrated in FIG. 8 on a browser of a terminal used by the service provider by utilizing a function of the authentication apparatus 50 operating as a Web server.

The client information change screen illustrated in FIG. 8 includes items set as new client information (i.e., client_id, client_secret) in addition to the service provider's number. The service provider may be able to utilize this screen to change the client information generated by the service provider itself, or the client information automatically generated in the screen with respect to the client 30. The change receiver 59 stores the specified client information in the management information 5001 in response to the depression of a "Reconfigure" button on the client information change screen illustrated in FIG. 8.

The reporting part 60 may mainly be implemented by the CPU 201 illustrated in FIG. 2, and is configured to transmit a change report indicating that the client information has been changed to the client 30 having the client_id changed by the change receiver 59.

### OPERATION EXAMPLE - ACCESS TOKEN ISSUING PROCESS

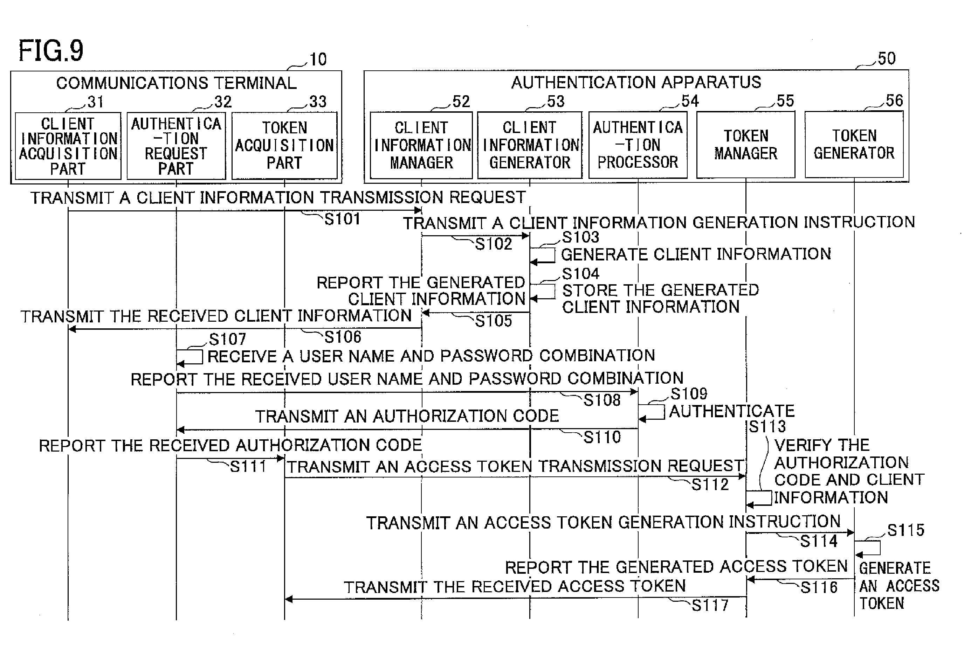

FIG. 9 is a sequence diagram illustrating an access token issuing process. This process illustrates a process immediately after a user (user name "user 1") owning the communications terminal 10 downloads a program of the client 30 to install the program in the communications terminal 10. The following illustration is given on the basis of an assumption in which the user has activated the client 30 by operating the communications terminal 10.

Initially, the client information acquisition part 31 of the communications terminal 10 transmits a client information transmission request to the authentication apparatus 50 via the Internet 2 (step S101). In this case, the client information acquisition part 31 may also report the client number "101", or the client name "Apps for Phone" to the authentication apparatus 50.

The client information manager 52 of the authentication apparatus 50 transmits a client information generation instruction to the client information generator 53 in response to reception of the client information transmission request (step S102). The client information generator 53 may generate, for example, the following client information in response to the instruction from the client information manager 52 (step S103).
- client_id : aUnWUB8PTG67VDXj27QX_vo_JsR6WeEl
- client_secret : ymYzYwt2d_uStLdnlOX67nlDw3DGDLXY

The client information generator 53 stores the generated client information in the management information 5001 illustrated in FIG. 5 (step S104). The client information generator 53 may also store the client number "101", or the client name "Apps for Phone" received from the client 30 in the management information 5001.

The client information generator 53 reports the generated client information to the client information manager 52 (step S105). The client information manager 52 transmits the received client information to the client information acquisition part 31 of the communications terminal 10 via the Internet 2 (step S106).

In the following, a description is given on the basis of an assumption in which user has attempted to use predetermined functions of the client 30 that internally utilize APIs of the authentication apparatus 50. The authentication request part 32 prompts the user to look at an authentication screen of the authentication apparatus 50 and to input a user name and password combination via the authentication screen, and receives the user name and password combination input by the user so as to utilize an authentication function of the authentication apparatus 50 (step S107). Subsequently, the authentication request part 32 reports the received user name "user1" and password "pass01" combination to the authentication processor 54 of the authentication apparatus 50, and requests the authentication processor 54 to authenticate the user (step S108).

The authentication processor 54 of the authentication apparatus 50 verifies whether the user name and password combination received from the authentication request part 32 is registered in the authentication information 5002 illustrated in FIG. 6 to authenticate the user (STEP s109). Subsequently, the authentication processor 54 determines that the authentication is successful in response to the verification of the received user name and password combination being registered in the authentication information 5002, and transmits an authorization code to the authentication request part 32 of the communications terminal 10 (step S110).

The authentication request part 32 of the communications terminal 10 reports the received authorization code to the token acquisition part 33 (step S111). The token acquisition part 33 transmits the received authorization code and the client information acquired in step S106 to the token manager 55 of the authentication apparatus 50 so as to make an access token transmission request of the token manager 55 (step S112).

The token manager 55 of the authentication apparatus 50 determines whether the received authorization code is identical to the authorization code transmitted by the authentication processor 54, and whether the received client information is registered in the management information 5001 (step S113). Subsequently, when the received authorization code is identical to the authorization code transmitted by the authentication processor 54, and the received client information is registered, the token manager 55 transmits an access token generation instruction to the token generator 56 (step S114).

The token generator 56 generates an access token upon receiving of the access token generation instruction from the token manager 55 (step S115). The token generator 56 reports the generated access token to the token manager 55 (step S116). The token manager 55 transmits the received access token to the token acquisition part 33 of the communications terminal 10 (step S117).

### OPERATION EXAMPLE - CLIENT INFORMATION CHANGING PROCESS

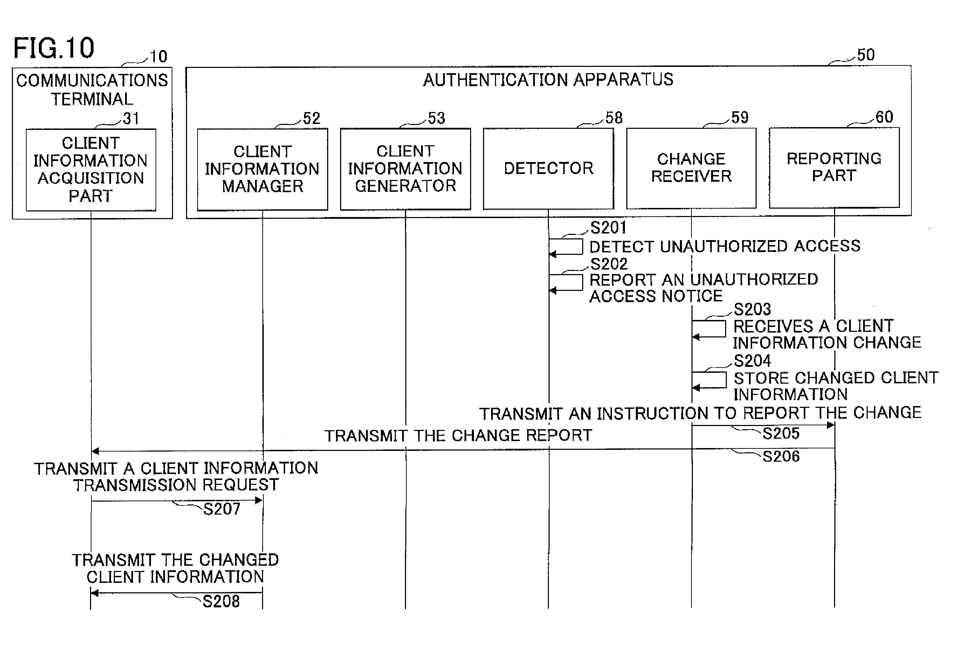

FIG. 10 is a sequence diagram illustrating a client information changing process. In the following case, it is assumed, on the basis of the process of FIG. 9, that an identified person has accessed the authentication apparatus 50 by using client information identical to the client information used by the client 30 after the client 30 of the communications terminal 10 has acquired the access token. FIG. 7 illustrates an example of a table recording such a case, in which the access recorder 57 of the authentication apparatus 50 records the above-described incident. That is, in FIG. 7, access records indicate that the authentication apparatus 50 is accessed by an identical client having the client information "client_id" using the IP address "11.1.1.55" in the United States, and using the IP address "90.1.1.120" in France approximately at the same time "2014-04-04 13:00:01 JST" and "2014-04-04 13:00:00 JST".

The detector 58 of the authentication apparatus 50 periodically or non-periodically monitors the access information illustrated in FIG. 7 to detect the above-described unauthorized access (step S201). The detector 58 reports the unauthorized access detected, together with the client_id, to the service provider by electronic mail (step S202).

Subsequently, the change receiver 59 of the authentication apparatus 50 presents the client information change screen illustrated in FIG. 8 in response to a request from the service provider 70, and receives a change of the client information from the service provider 70 (step S203). When receiving the change of the client information, the change receiver 59 stores the changed client information in the management information 5001 (step S204). Subsequently, the change receiver 59 transmits to the reporting part 60 an instruction to transmit the report indicating that the client information has been changed to the communications terminal 10 (step S205).

The reporting part 60 transmits the report indicating that the client information has been changed to the client information acquisition part 31 of the communications terminal 10 in response to the report from the change receiver 59 (step S206). When receiving the report, the client information acquisition part 31 of the communications terminal 10 transmits a client information transmission request to the client information manager 52 of the authentication apparatus 50 (step S207). The client information manager 52 of the authentication apparatus 50 transmits the changed client information to the communications terminal 10 (step S208).

### EFFECTS

In the authentication system according to the embodiment, even though the clients are the same type, the client information "client_secret" for identifying the clients is issued per client installation unit. Hence, even though the client information "client_secret" is leaked, updating work necessary for updating the client information "client_secret" may be performed only on this one client from which the client_secret is leaked. Accordingly, the management cost borne by the client provider for managing the client information "client_secret" may be reduced.

Note that the OAuth 2.0 is provided with an ImplicitFlow technique, which is prepared for clients such as smartphones or PCs that are susceptible to disclosure of the client information "client_secret". However, the ImplicitFlow technique has properties of easily allowing the clients to be spoofed. Hence, the embodiment of the present invention utilizes the client information "client_secret" to harden the spoofing of the clients. Even though the client information "client_secret" is leaked by chance, the effect of the leakage may be limited to the client that utilizes the leaked client information "client_secret".

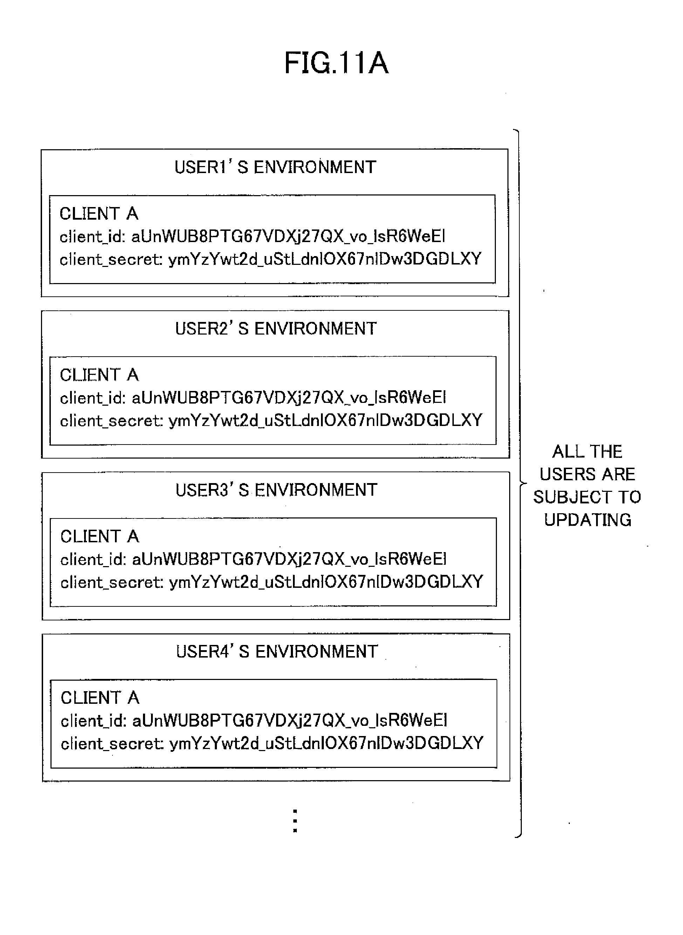

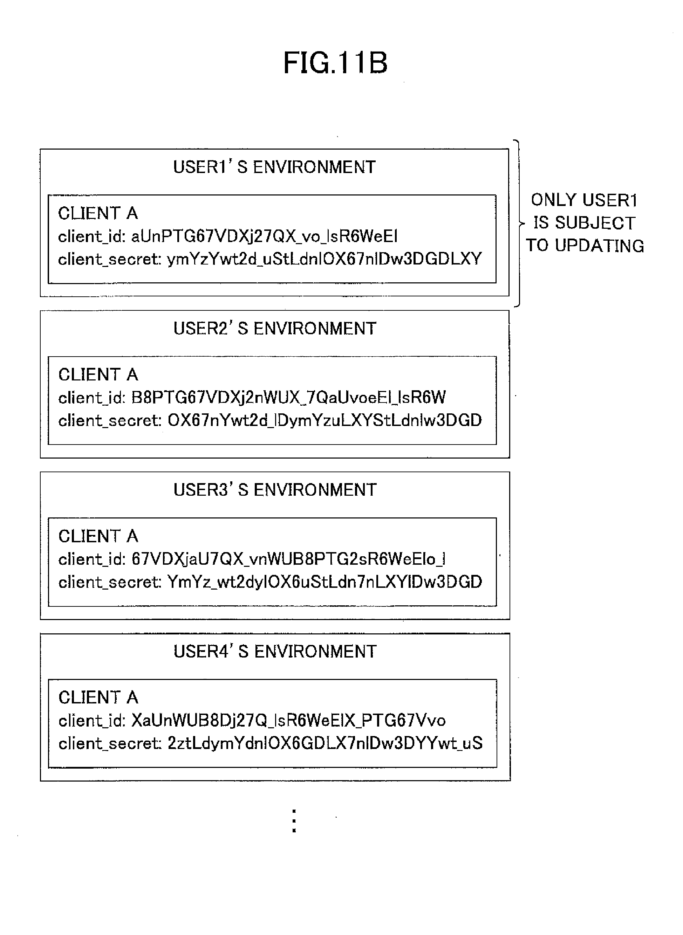

FIG. 11A is a diagram illustrating a related art system in which the common client information "client_id" and "client_secret" are shared by the clients A, whereas FIG. 11B is a diagram illustrating a system of the present embodiment in which the client information "client_id" and "client_secret" vary with the clients A per client installation unit. FIGS. 11A and 11B illustrate comparison of different effects when the client information "client_secret" is leaked. As illustrated in the related art system of FIG. 11A, the client information "client_id" and "client_secret" of the client A installed in all the users environments are common. Accordingly, when the client information "client_secret" is leaked, an updating process may be applied to all the users for reissuing and updating the client information "client_secret" for all the users.

However, in the system of the present embodiment, even though the client information "client_secret" is leaked from the environment of the user 1, other users may continue to perform an authentication process utilizing different client information "client_secrets". Accordingly, the service provider may simply reissue and update the client information "client_secret" of the user 1.

As described above, the authentication system 1 according to the embodiment may be able to minimize an adverse effect caused by the leakage of the client information used for the generation of the access token.

According to the embodiment of the present invention, it may be possible to minimize the adverse effect caused by the leakage of the client information used for the generation of the access token.

The present invention can be implemented in any convenient form, for example using dedicated hardware, or a mixture of dedicated hardware and software. The present invention may be implemented as computer software implemented by one or more networked processing apparatuses. The network can comprise any conventional terrestrial or wireless communications network, such as the Internet. The processing apparatuses can compromise any suitably programmed apparatuses such as a general purpose computer, personal digital assistant, mobile telephone (such as a WAP or 3G-compliant phone) and so on. Since the present invention can be implemented as software, each and every aspect of the present invention thus encompasses computer software implementable on a programmable device. The computer software can be provided to the programmable device using any storage medium for storing processor readable code such as a floppy disk, hard disk, CD ROM, magnetic tape device or solid state memory device.

The hardware platform includes any desired kind of hardware resources including, for example, a central processing unit (CPU), a random access memory (RAM), and a hard disk drive (HDD). The CPU may be implemented by any desired kind of any desired number of processors. The RAM may be implemented by any desired kind of volatile or non-volatile memory. The HDD may be implemented by any desired kind of non-volatile memory capable of storing a large amount of data. The hardware resources may additionally include an input device, an output device, or a network device, depending on the type of the apparatus. Alternatively, the HDD may be provided outside of the apparatus as long as the HDD is accessible. In this example, a cache memory of the CPU and the RAM may function as a physical memory or a primary memory of the apparatus, while the HDD may function as a secondary memory of the apparatus.

The present invention is not limited to the specifically disclosed embodiments, and variations and modifications may be made without departing from the scope of the present invention.

## Claims

1. An authentication system comprising:
a communications terminal;
an authentication apparatus configured to provide a function to the communications terminal using an access token;
a first request part configured to request the authentication apparatus to transmit client information for issuing the access token;
a first transmitter configured to generate the client information and transmit the generated client information to the communications terminal in response to the request from the first request part;
a second request part configured to transmit the client information to the authentication apparatus and request the authentication apparatus to provide the access token;
a determination part configured to determine whether the received client information is the client information transmitted from the first transmitter in response to the request from the second request part;
a generator configured to generate the access token when the determination part determines that the received client information is the client information transmitted from the first transmitter; and
a second transmitter configured to transmit the generated access token to the communications terminal.

2. The authentication system as claimed in claim 1, wherein
the client information is generated for each of applications installed in the communications terminal.

3. The authentication system as claimed in claim 2, further comprising:
a recorder configured to record an access from the communications terminal as an access record;
a detector configured to detect unauthorized access based on the recorded access record; and
a reporting part configured to transmit a report prompting a provider of the applications to change the client information in response to the unauthorized access detected by the detector.

4. The authentication system as claimed in claim 3, wherein
the generator generates new client information with respect to the communications terminal in response to a request from the provider.

5. The authentication system as claimed in claim 4, wherein
the first transmitter transmits the new client information to the communications terminal.

6. An authentication method executed by an authentication system, the authentication system including a communication terminal, and an authentication apparatus configured to provide a function to the communications terminal using an access token, the authentication method comprising:
requesting the authentication apparatus to transmit client information for issuing the access token;
generating the client information in response to the requesting the authentication apparatus to transmit the client information;
transmitting the generated client information to the communications terminal;
transmitting the client information to the authentication apparatus and requesting the authentication apparatus to provide the access token;
determining whether the received client information is the client information transmitted in the transmitting the generated client information to the communications terminal step in response to the request made in the transmitting the client information to the authentication apparatus step;
generating the access token when determining that the received client information is the client information transmitted in the transmitting the client information to the authentication apparatus step; and
transmitting the generated access token to the communications terminal.

7. The authentication method as claimed in claim 6, wherein
the client information is generated for each of applications installed in the communications terminal.

8. The authentication method as claimed in claim 7, further comprising:
recording an access from the communications terminal as an access record;
detecting unauthorized access based on the recorded access record; and
transmitting a report prompting a provider of the applications to change the client information in response to the detection of the unauthorized access.

9. The authentication method as claimed in claim 8, wherein
the generating the client information step includes generating new client information with respect to the communications terminal in response to a request from the provider.

10. The authentication method as claimed in claim 9, wherein
the transmitting the client information to the authentication apparatus step includes transmitting the new client information to the communications terminal.

11. An authentication apparatus providing a function to a communications terminal using an access token, the authentication apparatus comprising:
a first receiver configured to receive from the communications terminal a request to transmit client information for issuing the access token;
a first transmitter configured to generate the client information and transmit the generated client information to the communications terminal in response to the request received from the first receiver;
a second receiver configured to receive from the communications terminal a request to issue the access token including the client information;
a determination part configured to determine whether the received client information is the client information transmitted by the first transmitter in response to the request to issue the access token;
a generator configured to generate the access token when the determination part determines that the received client information is the client information transmitted from the first transmitter; and
a second transmitter configured to transmit the generated access token to the communications terminal.

12. Anon-transitory computer-readable recording medium storing a program, which when executed by a processor, causes a computer providing a function to a communications terminal using an access token to perform a process comprising:
receiving from the communications terminal a request to transmit client information for issuing the access token;
generating the client information and transmitting the generated client information to the communications terminal in response to the request to transmit the client information for issuing the access token;
receiving from the communications terminal a request to issue the access token including the client information;
determining whether the received client information is the client information transmitted in the generating the client information step in response to the request to issue the access token;
generating the access token when determining that the received client information is the client information transmitted in the generating the client information step; and
transmitting the generated access token to the communications terminal.
